# EUROPÄISCHE PATENTSCHRIFT

(11) **EP 1 266 285 B1**
(45) Veröffentlichungstag und Bekanntmachung des Hinweises auf die Patenterteilung: **05.09.2007**
(21) Anmeldenummer: 01909311.1
(22) Anmeldetag: 01.03.2001
(51) Int. Cl.: G06F 9/54, G06F 11/16

(54) **RECHNERKNOTENARCHITEKTUR MIT DEDIZIERTEM MIDDLEWARE PROZESSOR**
COMPUTER NODE ARCHITECTURE COMPRISING A DEDICATED MIDDLEWARE PROCESSOR
ARCHITECTURE DE NOEUD DE CALCUL COMPRENANT UN PROCESSEUR INTERGICIEL DEDIE

(30) Priorität: 02.03.2000 AT 3422000
(43) Veröffentlichungstag der Anmeldung: 18.12.2002
(73) Patentinhaber: FTS Computertechnik Ges.mbH, 2500 Baden-Siegenfeld (AT)
(72) Erfinder: KOPETZ, Hermann, A-2500 Baden-Siegenfeld (AT)
(74) Vertreter: Matschnig, Franz
(86) Internationale Anmeldenummer: PCT/AT2001/000058
(87) Internationale Veröffentlichungsnummer: WO 2001/065369

(56) Entgegenhaltungen:
- GUL N. KHAN: "Fault-Tolerant Architecture for High Performance Embedded System Applications" INTERNET DOCUMENT: PROCEEDINGS OF THE INTERNATIONAL CONFERENCE ON COMPUTER DESIGN, VLSI IN COMPUTERS AND PROCESSORS, ICCD'98, 5. - 7. Oktober 1998, Seiten 384-389, XP002178447 Austin, Texas, ¹tats-Unis d'Amérique
- NIELSEN P ET AL: "A PARALLEL COMPUTATION AND CONTROL COMPUTER FOR MICROROBOTICS" PROCEEDINGS OF THE AMERICAN CONTROL CONFERENCE. PITTSBURGH, JUNE 21 - 23, 1989, NEW YORK, IEEE, US, Bd. 1 CONF. 8, 21. Juni 1989 (1989-06-21), Seiten 472-477, XP000093251

## Beschreibung

Die Erfindung betrifft einen Multicomputerknotenrechner für ein verteiltes Computersystem.

In einem verteilten fehlertoleranten Echtzeitcomputersystem, bestehend aus einer Anzahl von Knotenrechnern und einem Echtzeitkommunikationssystem, müssen von den Knotenrechnern die Ausführung der Anwendungssoftware und diverse Verwaltungsaufgaben, die "Middlewareaufgaben", beispielsweise die Ansteuerung der Peripherie, die Verwaltung der Nachrichten, das Netzwerkmanagement etc. wahrgenommen werden. Durch die vielen impliziten Wechselwirkungen zwischen diesen nur schwach abhängigen Aufgaben wird die zeitliche Vorhersehbarkeit der Ausführungszeiten der Anwendungssoftware wesentlich beeinträchtigt. In der Literatur [siehe z.B. Anceaume, E., et. al. (1998). HADES: A Middleware Support for Distributed Safety-Critical Real-Time Applications. Proc. of the 18th Distributed Computer System Conference (DCS 18), IEEE Press. pp. 344 - 351; Janka, R. (1999). A New Development Framework Based on Efficient Middleware for Real-Time Embedded Heterogenous Multicomputers. Proc. of Engeneering of Computer Based Systems (ECBS 99), IEEE Press. pp. 261 - 268; Kim, K. (1998). ROAFTS: A Middleware Architecture for Real-time Object-Oriented Adaptive Fault-Tolerance Suppport. Proc. of the 3rd International High Assurance System Engineering Symposium, IEEE Press. pp. 50 - 57] wird vorgeschlagen, die Middleware-Software in eigenen Softwareobjekten abzukapseln, um eine Entkopplung zwischen der Middleware-Software und der Anwendungssoftware zu erreichen. Diese Entkopplung ist im zeitlichen Bereich unvollständig, da die gleiche CPU die zeitlich geschachtelte Ausführung der Anwendungssoftware und die der Middleware-Software vornehmen muss und durch die gemeinsame Verwendung von Ressourcen, wie etwa einem Cache-Speicher der CPU, zusätzliche ungewollte Abhängigkeiten entstehen.

Es ist eine Aufgabe der Erfindung, in Echtzeitcomputersystemen eine möglichst weitgehende Entkopplung zwischen der Middleware-Software und der Anwendersoftware zu erreichen.

Diese Aufgabe wird mit einem eingangs erwähnten Multicomputerknotenrechner gelöst, der erfindungsgemäß folgende Einheiten umfasst: mindestens einen Host-Computer mit dedizierter CPU und dediziertem Speicher, mindestens einen Middleware-Computer mit dedizierter CPU und dediziertem Speicher, und mindestens ein mit dem Middleware-Computer verbundenes Kommunikationssystem, das über mindestens einen Kommunikationskanal mit anderen Knotenrechnern des verteilten Computersystems verbunden ist, wobei zwischen dem Host-Computer und dem Middleware-Computer eine Schnittstelle vorgesehen ist, welche aus einer dual-ported Speicherschnittstelle (DPRAM) besteht, auf die der Middleware-Computer während a priori spezifizierter Zeitintervalle lesend oder schreibend zugreift und auf die der Host-Computer außerhalb dieser a priori spezifizierten Zeitintervalle lesend oder schreibend zugreifen kann, und wobei die Schnittstelle zwischen dem Host-Computer und dem Middleware-Computer zusätzlich eine ausgezeichnete Speicherzelle, die Zeitzelle, enthält, in die der Middleware-Computer periodisch die aktuelle Zeit schreibt.

Die vorliegende Erfindung schlägt eine Knotenrechnerarchitektur vor, bei welcher die Anwendungssoftware auf einem dedizierten Host-Computer ausgeführt wird, der über eine a priori voll spezifizierte zeitgesteuerte Datenschnittstelle mit einem Middleware-Computer verbunden ist. Die Verwaltungsaufgaben können in einer solchen Architektur von dem Middleware-Computer abgewickelt werden, der die von der Anwendung benötigten Daten rechtzeitig in die Datenschnittstelle schreibt bzw. von dieser liest.

Durch die Auslagerung der Anwendungsaufgaben auf einen dedizierten Host-Computer, mit einer im Wert- und Zeitbereich präzise definierten Datenschnittstelle zum Middleware-Computer lassen sich folgende Vorteile realisieren:
(i) Sobald die Schnittstelle zwischen Host-Computer und Middleware-Computer spezifiziert ist, kann die Anwendungssoftware unabhängig vom Rest des Systems entwickelt und getestet werden. Dadurch lässt sich die Entwicklungszeit von großen Systemen reduzieren.
(ii) Die Wiederverwendbarkeit einer einmal getesteten Anwendersoftware in unterschiedlichen Systemumgebungen ist gegeben, wenn die gegebene Schnittstellenspezifikation zwischen Host-Computer und Middleware-Computer eingehalten wird.
(iii) Die von der Anwendungssoftware entkoppelte Middleware-Software kann weitgehend automatisch durch Softwarewerkzeuge erstellt werden.

Die Erfindung samt ihren Vorteilen wird im folgenden an Hand von Ausführungsbeispielen näher erläutert, die in der Zeichnung näher erläutert sind. In dieser zeigen
Fig. 1 die Struktur eines verteilten Computersystems mit vier Knotenrechnern, und
Fig. 2 die Struktur eines Multicomputerknotenrechners, bestehend aus einem Host Computer, einem Middleware-Computer, einer Kommunikationskontrolleinheit und dem Anschluss von Prozessperipherie.

Im folgenden wird eine Realisierung des neuen Verfahrens an einem Beispiel mit vier Multicomputerknotenrechnern, die über einen gemeinsamen Bus kommunizieren, gezeigt.

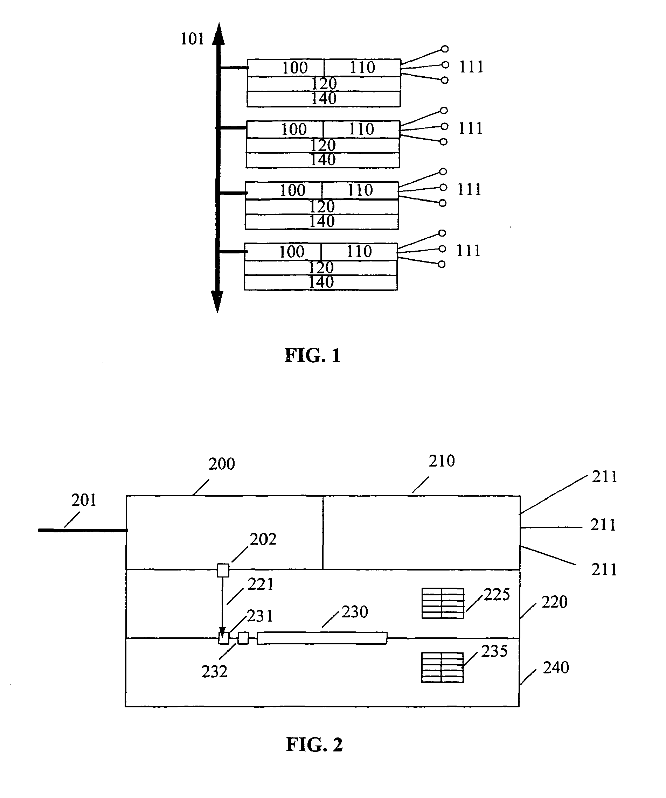

Die Fig. 1 zeigt ein System von vier Multicomputerknotenrechnern, die über einen gemeinsamen Bus 101 Daten austauschen. Jeder Knotenrechner verfügt über einen Kommunikationskontroller 100 zum gemeinsamen Bus 101, einen Prozess I/O Controller 110, der mit den Sensoren und Aktuatoren 111 verbunden ist, sowie einen Middleware-Computer 120 mit eigener CPU und Speicher und einen Hostcomputer 140.

Weiters zeigt die Fig. 2 den inneren Aufbau eines Multicomputerknotenrechners. Der Kommunikationskontroller 200 ist mit dem gemeinsamen Bus 101 über eine Stichleitung 201 verbunden. Der I/O Kontroller 210 liest und schreibt über Leitungen 211 oder über einen Feldbus die Signale zu den Sensoren und Aktuatoren 111. Beide Kontroller, der Kommunikationskontroller 200 und der I/O Kontroller 210, werden vom Middleware-Computer 220 gesteuert. Der Middleware-Computer 220 verfügt über einen eigenen Speicher und eine eigene CPU und die notwendige Software. Eine Datenschnittstelle 230 zwischen dem Middleware-Computer 220 und dem Host-Computer 240 wird durch einen gemeinsamen Speicherbereich ("dual ported RAM"), der von beiden Computern angesprochen werden kann, gebildet. In einer Datenstruktur 225 ist angegeben, wann der Middleware-Computer 220 in die Datenschnittstelle 230 zum Host-Computer 240 schreiben darf und wann er aus dieser Schnittstelle 230 lesen darf. Analog ist in einer Datenstruktur 235 angegeben, wann der Host-Computer 240 in die Datenschnittstelle 230 schreiben und wann er aus dieser Schnittstelle lesen darf. Wenn alle Kommunikationskontroller 100, die über den Bus 101 verbunden sind, gemeinsam eine globale Zeit aufbauen, so wird diese globale Zeit periodisch in ein Register 202 und über eine Signalleitung 221 gleichzeitig per Hardware in ein Register 231 in die Schnittstelle 230 zwischen Middleware-Computer 220 und Host-Computer 240 geschrieben. Ein Verfahren zum Aufbau einer globalen Zeit in einem verteilten Computersystem ist in dem europäischen Patent EP 658 257 sowie in den US-Patenten US 4 866 606 und US 5 694 542 veröffentlicht worden. Schließlich kann die Schnittstelle 230 zwischen Middleware-Computer 220 und Host-Computer 240 noch einen Timer enthalten, der einen Hardwareinterrupt im Host-Computer 240auslöst, wenn der Inhalt der Zeitzelle 231 einen beispielsweise von dem Host-Computer 240 in die ausgezeichnete Speicherzelle 232 in der Schnittstelle 230 eingetragenen Wert erreicht.

Der Host-Computer 240 kann auch über einen seriellen Nachrichtenkanal mit dem Middleware-Computer 220 verbunden sein. In diesem Fall muss der Middleware-Computer zu in der Datenstruktur 225 angegebenen fixen Zeitpunkten Nachrichten über diesen seriellen Nachrichtenkanal an den Hostcomputer 240 senden. In jeder dieser Nachrichten muss in einem ausgezeichneten Feld, der Zeitzelle 231, die aktuelle Zeit eingetragen sein. Der Host-computer 240 muss zu den in der Datenstruktur 235 angegebenen Zeitpunkten Nachrichten an den Middleware-Computer 220 senden.

Der Hostcomputer 240 kann ein COTS-Computer ("commercial off the shelf") sein, wie etwa ein Personal Computer, der über eine Standardschnittstelle, beispielsweise eine PCI-Schnittstelle, mit dem Middleware-Computer 220 verbunden ist.

Im Betrieb versorgt der Middleware-Computers 220 über die Schnittstelle 230 den Hostcomputer 240 zeitgereicht mit allen notwendigen Daten und übernimmt die Ergebnisse des Hostcomputer 240 zu vorgegebenen Zeitpunkten, um diese Ergebnisse an die anderen Knotenrechner oder die Prozessperipherie weiterzuleiten. Der Middleware-Computer 220 kann diese Verwaltungsaufgaben des Systems durchführen ohne die Anwendung zu beeinflussen. Da der Host-Computer 240 die Anwendersoftware ohne Unterbrechungen ausführen kann, ist es wesentlich leichter, die maximale Ausführungszeit (" Worst-case execution time" - WCET) der Anwendungsprozesse a priori zu berechnen.

In einem fehlertoleranten System bilden eine Anzahl von replizierten Knotenrechner eine Fault-Tolerant Unit (FTU). Solange - entsprechend der Fehlerhypothese - eine Minimalzahl von Knotenrechnern einer FTU funktionieren, bleiben die Leistungen der FTU - auch im Fehlerfall - erhalten (siehe, z.B. Kopetz, H. (1997). Real-Time Systems, *Design Principles for Distributed Embedded Applications;* ISBN: 0-7923-9894-7, Third printing 1999. Boston. Kluwer Academic Publishers, Seite 131). In einer solchen fehlertoleranten Konfiguration kann der Middleware-Computers 220 jedes Knotenrechners die Aufgaben der Nachrichtenreduktion und der Votierung übernehmen. Da die votierten Nachrichten an der Schnittstelle 230 zum gleichen Zeitpunkt abgegeben werden wie in nicht fehlertoleranten Systemen, sind in dieser Architektur die Mechanismen der Fehlertoleranz für den Hostcomputer 240 transparent, d.h. zur Einführung von Fehlertoleranz muss die Anwendungssoftware in dem Host-Computer 240 nicht geändert werden.

## Patentansprüche

1. Multicomputerknotenrechner für ein verteiltes Computersystem, **dadurch gekennzeichnet, dass** er folgende Einheiten umfasst: mindestens einen Host-Computer (140, 240) mit dedizierter CPU und dediziertern Speicher, mindestens einen Middleware-Computer (120, 220) mit dedizierter CPU und dediziertern Speicher, und mindestens ein mit dem Middleware-Computer (120, 220) verbundenes Kommunikationssystem (101), das über mindestens einen Kommunikationskanal mit anderen Knotenrechnern des verteilten Computersytems verbindbar ist, wobei zwischen dem Host-Computer (240) und dem Middleware-Computer (220) eine Schnittstelle (230) vorgesehen ist, auf die der Middleware-Computer (220) während a priori spezifizierter Zeitintervalle lesend oder schreibend zugreift und auf die der Host-Computer (240) außerhalb dieser a priori spezifizierten Zeitintervalle lesend oder schreibend zugreifen kann, und wobei die Schnittstelle (230) zwischen dem Host-Computer (240) und dem Middleware-Coroputer (220) zusätzlich eine ausgezeichnete Zeitzelle (231) enthält, in die der Middleware-Computer (220) periodisch die aktuelle Zeit schreibt.

2. Knotenrechner nach Anspruch 1, **dadurch gekennzeichnet, dass** die Schnittstelle (230) zwischen dem Middleware-Computer (220) und dem Host-Computer (240) aus einer dual-ported Speicherschnittstelle, DPRAM genannt, besteht und die Zeitzelle (231) eine Speicherzelle ist.

3. Knotenrechner nach Anspruch 1, **dadurch gekennzeichnet, dass** die Schnittstelle (230) zwischen dem Middleware-Computer (220) und dem Host-Computer (240) als serielle Nachrichtenschnittstelle ausgeführt ist, über die der Middleware-Computer (220) zu a priori festgelegten Zeitpunkten Nachrichten sendet, und dass die Zeitzelle (231) durch ein ausgezeichnetes Feld in diesen Nachrichten realisiert ist.

4. Knotenrechner nach Anspruch 2, **dadurch gekennzeichnet, dass** in der Schnittstelle (230) zwischen dem Host-Computer (240) und dem Middleware-Computer (220) eine weitere ausgezeichnete Speicherstelle (232) vorhanden ist, in welche der Host-Computer (240) einen Zeitwert eintragen kann und wo von der Hardware ein Interruptsignal für den Host-Computer (240) generiert wird, sobald der Inhalt der Zeitzelle (231) dem Zeitwert in dieser ausgezeichneten Speicherstelle (232) entspricht.

5. Knotenrechner nach einem der Ansprüche 1 bis 3, **dadurch gekennzeichnet, dass** das Kommunikationssystem (100) die globale Zeit aufbaut und der Inhalt der Zeitzelle (231) in der Schnittstelle (230) zwischen dem Host-Computer (240) und dem Middleware-Computer (220) direkt von einem lokalen Kommunikationskontroller (200) des Kommunikationssystems periodisch über eine Hardwaresignalleitung (221) aktualisiert wird.

6. Knotenrechner nach einem der Ansprüche 1 bis 5, **dadurch gekennzeichnet, dass** der Middleware-Computer (220) die globale Zeit von einer externen Zeitbasis einliest.

7. Knotenrechner nach einem der Ansprüche 1 bis 6, **dadurch gekennzeichnet, dass** als Host-Computer (240) ein commercial-of-the-shelf (COTS) Computer verwendet wird, der über eine Standardschnittstelle mit dem Middleware-Computer verbunden ist.

8. Knotenrechner nach einem der Ansprüche 1 bis 7, **dadurch gekennzeichnet, dass** bei der Einführung von Fehlertoleranz durch Replizierung der Knotenrechner die Schnittstelle (230) zwischen dem Middleware-Computer (220) und Host-Computer (240) weder in ihrem Zeitverhalten noch in ihrem Werteverhalten gegenüber der nicht fehlertoleranten Konfiguration geändert wird.

## Claims

1. Multi-computer node computer for a distributed computer system, **characterised in that** it includes the following units: at least one host computer (140, 240) with dedicated CPU and dedicated memory, at least one middleware computer (120, 220) with dedicated CPU and dedicated memory, and at least one communication system (101), which is connected to the middleware computer (120, 220), and which can be connected to other node computers of the distributed computer system by means of at least one communication channel, wherein an interface (230) is provided between the host computer (240) and the middleware computer (220) to which the middleware computer (220) has read or write access during a priori specified time intervals and to which the host computer (240) can have read or write access outside these a priori specified time intervals, and wherein the interface (230) between the host computer (240) and the middleware computer (220) also has an allocated time cell (231) into which the middleware computer (220) periodically writes the current time.

2. Node computer according to Claim 1, **characterised in that** the interface (230) between the middleware computer (220) and the host computer (240) consists of a dual-ported memory interface, known as a DPRAM, and that the time cell (231) is a memory cell.

3. Node computer according to Claim 1, **characterised in that** the interface (230) between the middleware computer (220) and the host computer (240) is designed as a serial message interface, by means of which the middleware computer (220) sends messages at a priori defined points in time, and that the time cell (231) is realised by an allocated field in these messages.

4. Node computer according to Claim 2, **characterised in that** a further allocated memory cell (232) is available in the interface (230) between the host computer (240) and the middleware computer (220) into which the host computer (240) can enter a time value and where an interrupt signal for the host computer (240) is generated by the hardware when the content of the time cell (231) corresponds to the time value in this allocated memory cell (232).

5. Node computer according to one of Claims 1 to 3, **characterised in that** the communication system (100) establishes the global time, and that the content of the time cell (231) in the interface (230) between the host computer (240) and the middleware computer (220) is periodically updated directly by a local communication controller (200) of the communication system by means of a hardware signal line (221).

6. Node computer according to one of Claims 1 to 5, **characterised in that** the middleware computer (220) reads in the global time from an external time base.

7. Node computer according to one of Claims 1 to 6, **characterised in that** a commercial off-the-shelf (COTS) computer, which is connected to the middleware computer by means of a standard interface, is used as the host computer (240).

8. Node computer according to one of Claims 1 to 7, **characterised in that**, when fault tolerance is introduced by replication of the node computer, the interface (230) between the middleware computer (220) and host computer (240) is unchanged both in its time response and in its value behaviour compared with the non fault-tolerant configuration.

## Revendications

1. Noeud de calcul à plusieurs ordinateurs destiné à un système d'ordinateurs distribués, **caractérisé en ce qu'**il comporte les unités suivantes : au moins un ordinateur hôte (140, 240) avec une unité centrale dédiée -CPU- et une mémoire dédiée, au moins un ordinateur intergiciel (120, 220) avec une unité centrale -CPU- dédiée et une mémoire dédiée, et au moins un système de communication (101) relié à l'ordinateur intergiciel (120, 220) et pouvant être relié par le biais d'au moins un canal de communication à d'autres noeuds de calcul du système d'ordinateurs distribués, dans lequel il est prévu entre l'ordinateur hôte (240) et l'ordinateur intergiciel (220) une interface (230) à laquelle l'ordinateur intergiciel (220) fait un accès en lecture ou en écriture pendant un intervalle de temps spécifié a priori et à laquelle l'ordinateur hôte (240) peut faire un accès en lecture et en écriture en dehors de cet intervalle de temps spécifié a priori, et dans lequel l'interface (230) entre l'ordinateur hôte (240) et l'ordinateur intergiciel (220) contient en plus une cellule de temps marquée (231) dans laquelle l'ordinateur intergiciel (220) écrit périodiquement le temps courant.

2. Noeud de calcul selon la revendication 1, **caractérisé en ce que** l'interface (230) entre l'ordinateur intergiciel (220) et l'ordinateur hôte (240) se compose d'une interface de mémoire à double port, appelée DPRAM et que la cellule de temps (231) est une cellule de mémoire.

3. Noeud de calcul selon la revendication 1, **caractérisé en ce que** l'interface (230) entre l'ordinateur intergiciel (220) et l'ordinateur hôte (240) est exécutée sous forme d'une interface série de messages par le biais de laquelle l'ordinateur intergiciel (220) envoie des messages à des instants définis a priori, et **en ce que** la cellule de temps (231) est réalisée par un champ marqué dans ces messages.

4. Noeud de calcul selon la revendication 2, **caractérisé en ce qu'**il existe dans l'interface (230) entre l'ordinateur hôte (240) et l'ordinateur intergiciel (220) un autre emplacement de mémoire marqué (232) dans lequel l'ordinateur hôte (240) peut inscrire une valeur temporelle et où un signal d'interruption pour l'ordinateur hôte (240) est généré par le matériel dès que le contenu de la cellule de temps (231) correspond à la valeur temporelle dans cet emplacement de mémoire marqué (232).

5. Noeud de calcul selon l'une des revendications 1 à 3, **caractérisé en ce que** le système de communication (100) établit l'heure universelle et **en ce que** le contenu de la cellule de temps (231) dans l'interface (230) entre l'ordinateur hôte (240) et l'ordinateur intergiciel (220) est actualisé directement par un contrôleur de communication local (200) du système de communication de manière périodique par le biais d'une ligne de signal matérielle (221).

6. Noeud de calcul selon l'une des revendications 1 à 5, **caractérisé en ce que** l'ordinateur intergiciel (220) lit l'heure universelle depuis une base de temps externe.

7. Noeud de calcul selon l'une des revendications 1 à 6, **caractérisé en ce que** l'ordinateur hôte (240) employé est un ordinateur commercial prêt à l'emploi (COTS) qui est relié à l'ordinateur intergiciel par le biais d'une interface standard.

8. Noeud de calcul selon l'une des revendications 1 à 7, **caractérisé en ce que**, lors de l'introduction d'une tolérance aux pannes par réplication des noeuds de calcul, l'interface (230) entre l'ordinateur intergiciel (220) et l'ordinateur hôte (240) n'est pas modifiée ni dans son comportement dans le temps ni dans son comportement en valeur par rapport à la configuration non tolérante aux pannes.
